# EUROPEAN PATENT APPLICATION

(11) **EP 1 655 674 A2**
(43) Date of publication of application: **10.05.2006**
(21) Application number: 02755905.3
(22) Date of filing: 09.08.2002
(51) Int. Cl.: G06F 17/28

(54) **THIRD LANGUAGE TEXT GENERATING ALGORITHM BY MULTI−LINGUAL TEXT INPUTTING AND DEVICE AND PROGRAM THEREFOR**

(30) Priority: 10.08.2001 JP 2001243118
(71) Applicant: National Institute of Information and Communications Technology, Independent Administrative Institution, Koganei-Shi, Tokyo 184-0015 (JP)
(72) Inventor: ISAHARA, H., COMM. RES. LAB., IND. ADM INSTITUTION, Koganei-shi, Tokyo 184-0015 (JP)
(74) Representative: Finnie, Peter John
(86) International application number: PCT/JP2002/008192
(87) International publication number: WO 2003/014967

(57) **Abstract**

Provided is a technique which includes inputting a plurality of multi-lingual texts and using multi-lingual text corpora, thereby generating a higher-accuracy third language text as compared to the input of a unilingual text which has heretofore taken place. After inputting the texts, the processes for analyzing, converting and generating are performed, and a target language document text is outputted. The generation of target language document text does not require a large-scale corpus because information characteristic of the language can be automatically acquired.

## Description

### TECHNICAL FIELD

The invention relates to a technique for generating a target language text with high accuracy using machine translation or the like. More particularly, the invention relates to a technique which involves inputting a plurality of languages and merging language information, thereby improving the accuracy of target language text generation.

### BACKGROUND ART

Recently, a great deal of information has been recorded on computers, and the Internet has become widely available. The wider use of the Internet, in particular, has produced the larger problem of the gap between those who have means for accessing such digital data and those who do not have the means, that is, so-called digital divide.

In addition, most of the information recorded on the Internet is written in major languages such as English, and the gap between those who understand the languages and those who do not understand the languages is also a large problem.

To eliminate the digital divide caused by the above-mentioned language barrier, studies of machine translation have been heretofore conducted in various places and undertaken by many companies and laboratories at home and abroad.

For example, studies are performed on machine translation using a corpus, which uses bilingual input language-output language texts to obtain knowledge required to translate the languages into each other. However, the above-mentioned translation is feasible only for languages for which large-scale bilingual text data is provided. Moreover, the translation contributes to higher-accuracy machine translation than hitherto but can be used only for major languages because of merely obtaining knowledge.

As mentioned above, most of the heretofore studied techniques can be used only for translation of major languages into each other, and it must be therefore said that the techniques do not contribute to the elimination of the digital divide caused by the language barrier. Advances in information technology including the Internet are rapidly widening the above-mentioned gap, and an urgent necessity is to solve the problem before a fatal gap appears. However, developing countries lack the ability to bear the costs of developing linguistic resources and techniques, and it is thus difficult for the information industry to make heavy unprofitable investments. Even advanced countries are also unable to bear the costs of individually handling many minor languages.

To solve these problems, there is sought the development of the techniques of language processing capable of handling even minor languages at low cost, but the development of such techniques has been heretofore slow.

Furthermore, the accuracy of machine translation which is currently available does not reach a state of widespread practicability. There is a sentence as given below: a single sentence in itself is not fully comprehensible, and the sentence is comprehensible only after the understanding of its context. However, the techniques of natural language processing which are currently available do not have the sufficient capability of handling context.

### DISCLOSURE OF THE INVENTION

The invention is designed to overcome the foregoing problems of the prior arts. It is an object of the invention to provide a technique for generating a third language text, which is available for machine translation not only to translate major languages into each other but also to translate major and minor languages into each other. It is another object of the invention to provide a technique for generating a text, which enables generating a text with higher accuracy than hitherto.

To solve the above-mentioned problems, the invention uses a third language text generating algorithm as given below. More specifically, the most innovative technique of the invention is the technique which involves generating a new third language text by using a plurality of multi-lingual texts. The algorithm of the invention includes the steps of:
(1) inputting two or more multi-lingual texts written in different languages including a first language which serves as a source language and at least a second language into which the first language is translated;
(2) performing language analysis including at least dependency analysis and semantic analysis, on each of the multi-lingual texts in the form of each language or a combination of any two or more languages, thereby obtaining language information on at least a dependency structure and semantic representation; and
(3) generating a third language text,
   wherein the generating step generates a third language text by using the language information obtained by the analyzing step, or
   the algorithm further including the step of performing language conversion based on the results of analysis obtained by the analyzing step or based on the results of analysis and conversion knowledge characteristic of a third language, the converting step following the analyzing step,
   wherein the generating step generates a third language text by using at least either the language information obtained by the analyzing step or the results of conversion obtained by the converting step.

In the invention, the analyzing step may include an associating process for performing associating to determine the correspondence between words constructing the multi-lingual texts, the correspondence between phrases constructing the multi-lingual texts, and the correspondence between sentences constructing the multi-lingual texts; an analyzing process for analyzing at least the first language text by using an analysis module previously prepared; and a merging process for analyzing parts in at least the second language text corresponding to the first language text, based on the results of associating, by using an analysis module previously prepared, and merging the results of analysis.

At least one of the analyzing, converting and generating steps may use rule-based information containing at least either dictionary information or grammar information on each language, and empirical information based on the results of learning obtained from actual data in corpora.

The generating step may include automatically acquiring part or all of information on at least either third language syntax structure information or third language word usage information from an existing third language corpus; and generating a third language text based on the automatically acquired information characteristic of the third language.

The invention can also provide a third language text generating device using the above-described method. The invention can also provide a third language text generating program using the above-described method.

### BRIEF DESCRIPTION OF THE DRAWINGS

Fig. 1 is a flowchart of a conventional process for generating a target language document text;
Fig. 2 is a flowchart of a process for generating a target language document text according to the invention;
Fig. 3 is a diagram of the configuration of inputting means of a third language text generating device according to the invention;
Fig. 4 is a diagram of the configuration of an analysis system of the third language text generating device according to the invention;
Fig. 5 is a diagram of the configuration of a conversion system of the third language text generating device according to the invention; and
Fig. 6 is a diagram of the configuration of a generation system of the third language text generating device according to the invention.

Parts indicated by reference numerals are as follows. Numeral 20 denotes a bilingual document text, numeral 21 denotes amulti-lingual document text analysis system, numeral 22 denotes a conversion system, numeral 23 denotes a generation system, numeral 24 denotes a target language document text, numeral 25 denotes conversion knowledge, numeral 26 denotes language knowledge for generation, numeral 27 denotes a bilingual text corpus, numeral 28 denotes a unilingual text corpus, numeral 29 denotes small-scale target language data, and numeral 30 denotes the arrows which indicate a process for obtaining conversion knowledge from the bilingual text corpus.

### BEST MODE FOR CARRYING OUT THE INVENTION

An embodiment of the invention will be described below with reference to an exemplary embodiment shown in the drawings.

The invention provides a technique for generating a target third language text (hereinafter referred to as a target language) with higher accuracy than the accuracy of conventional machine translation, the technique involving: obtaining content information from a plurality of high-accuracy multi-lingual document texts manually prepared, e.g., two languages, the Japanese and English languages; obtaining a reduction rule from a bilingual dictionary or the like; and obtaining linguistic characteristics from target language document texts, thereby generating an accurate target language text.

The conventional techniques of natural language processing simulate the ordinary possible activities of humans, such as read one sentence and translate or summarize the sentence.

However, a fatal flaw exists: it is difficult to ensure techniques that permit a computer to handle context. The invention includes extracting information in sum or product form from, for example, bilingual Japanese-English document texts, thereby realizing a deep understanding of context.

The approach of extracting information in sum form to increase the amount of information, as mentioned above, is included in techniques for other information processing. The technique of the invention, however, is quite novel in that multi-lingual texts are used to activelydisambiguate a sentence, and this is the most remarkable feature of the invention.

The technique of the invention is quite novel also in that information characteristic of each language is obtained, based on resultant understanding, from a unilingual target language text corpus so as to generate a surface text.

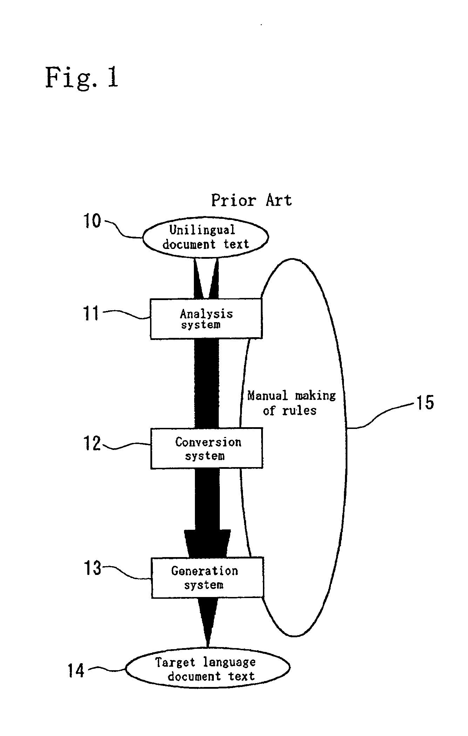

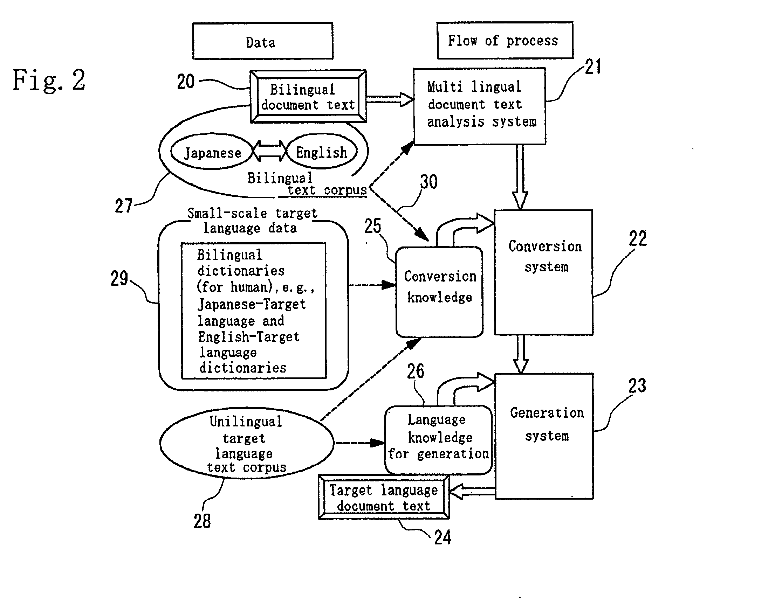

Fig. 1 shows a flowchart of a process for converting a unilingual document text into a target language and generating a target language document text, which has heretofore taken place. Fig. 2 shows a flowchart of a process for converting bilingual Japanese-English document texts into a target language and generating a target language document text according to the invention.

In conventional methods, a process for translating a unilingual document text (10) into a target language document text (14) is generally executed through an analysis system (11), a conversion system (12) and a generation system (13), into which the process is broadly divided. Manual making of rules (15) is essential for the development of the systems (11), (12) and (13), and the development of high-accuracy systems requires analysis operation of large-scale document texts. For example, huge costs and studies are necessary for a large- scale text corpus for use in learning, and at present, such corpora are being gradually prepared only for major languages but are hardly likely to be prepared for minor languages.

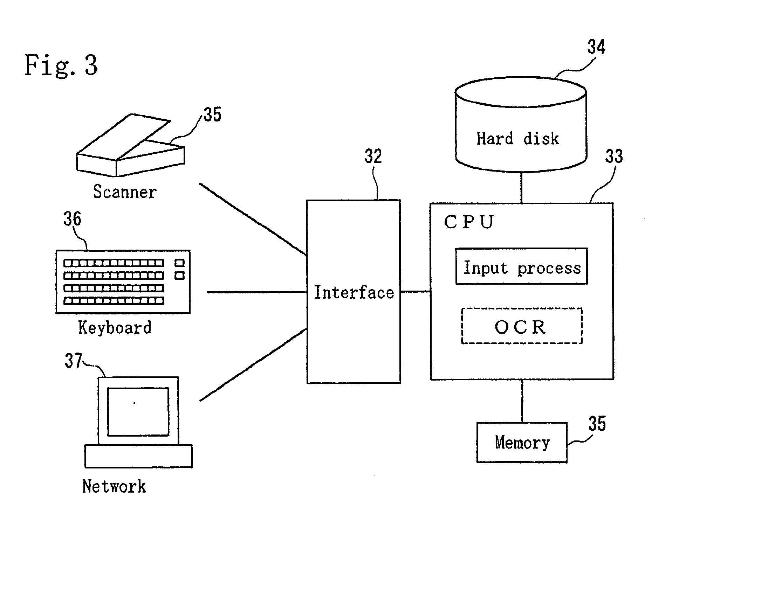

In the invention, as shown in Fig. 2, at least two languages for which corpora are prepared, such as major languages, are used and undergo a process using an analysis system (21), a conversion system (22) and a generation system (23) so as to generate a target language document text (24). More specifically, a third language text generating device uses inputting means for inputting two or more multi-lingual texts, shown in Fig. 3, to input document texts.

Texts can be inputted in the following manner: texts are captured as image data bya scanner (31), the image datais inputted from the scanner (31) to a CPU (33) via an interface (32), the image data is converted into text data by the CPU (33) performing known OCR, and the text data is stored in either a hard disk (34) or a memory (35) . Text data previously stored in the hard disk (34) may be read out and inputted.

Alternatively, a keyboard (36) with which a computer is equipped may be used to enter multi-lingual texts, or texts may be obtained from other computer (37) connected over a network. A supporting I/O device or network adapter or the like can be used as the interface between the keyboard (36) and computer (37) and the CPU (33).

Each of the multi-lingual texts, in the form of each language or a combination of any two or more languages, is supplied to the multi-lingual document text analysis system (21) which functions as analyzingmeans for analyzing language information.

The third language text generating device further has the conversion system (22) which functions as converting means for performing language conversion into a third language based on at least the results of analysis obtained by the analyzing step, and the generation system (23) which functions as generating means for generating a third language text based on the results of conversion by the converting step.

Outputting means (not shown), which is additionally provided, can be used to output the results of process mentioned above. A monitor for screen display, a storage device such as a hard disk, or other computer on the network can be used as the outputting means.

Input languages are, for example, bilingual Japanese-English document texts, which correspond to each other. In the invention, a first language is determined to serve as a source language for translation, and the first language is inputted together with a second language into which the first language is translated.

The number of input languages can be two or more, and for example, three languages (Japanese, English, French, etc.) may be used for high-accuracy analysis.

One main reason why conventional machine translation systems do not improve in accuracy is the difficulty of language analysis. The difficulty of analysis corresponds to the incapability of disambiguation, but the use of multi-lingual texts may enable analysis.

For example, a Japanese word in itself does not give an understanding of whether or not the word is a plural noun, whereas an English word makes it possible to judge whether the word is a singular or plural noun according to whether the word is in singular or plural form. On the other hand, an English word in itself does not give an understanding of how the word semantically functions, whereas a Japanese wordmakes it possible to understand that the word means information indicative of, for example, "a place" because a particle accompanies the word. This is particularly effective when using languages whose linguistic structures are greatly different, such as a combination of Japanese and English.

In the invention, it is therefore preferable that languages having different linguistic structures, such as a combination of Japanese and English, a combination of Japanese and Chinese or a combination of these three languages, be used as a combination of languages for multi-lingual document texts. In contrast, a combination of English and French alone or the like does not necessarily achieve the effect of the invention. However, a combination of English, French and Japanese, for example, is more likely to enable higher-accuracy text generation than a combination of English and Japanese alone, and such a combination may be used.

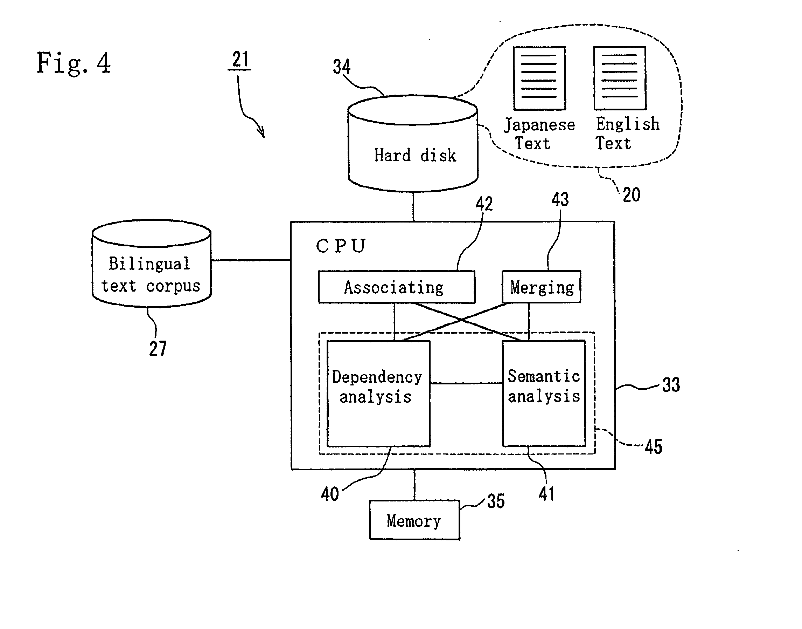

Next, the detailed description is given with regard to the analysis system (21) according to the invention. Fig. 4 shows the configuration of the analysis system.

The analysis system (21) uses the CPU (33) to analyze the dependence of one of two words on the other (alternatively, a word may be replaced by a slightly larger unit such as a phrase ("bunsetsu") in a Japanese sentence), providedthat the inputting means inputs bilingual Japanese-English document texts (20) stored in the hard disk (34). The CPU (33) operates in conjunction with various devices or members of the computer, such as the memory (35), as needed.

In the exemplary embodiment, the inputted bilingual document texts (20) are first subjected to an associating process: sentences in one text are associated with corresponding sentences in the other text to determine the correspondence between the sentences constructing the bilingual document texts, and the correspondence is used to merge the results of analysis obtained by a subsequent analysis process.

More specifically, even if the bilingual Japanese-English documenttexts (20) arewhollyinaword-for-wordcorrespondence, the correspondence may not be mechanically found because the number of sentences varies according to the characteristics of the languages, the ease of reading thereof, and the like.

Thus, an associating portion (42) performs the associating process for determining the correspondence between the sentences constructing the bilingual document texts (20), thereby associating the sentences in one text with the corresponding sentences in the other text. Associated data is stored in the hard disk (34) or the like, for example in such a manner that the Japanese text is tagged to indicate, for instance, that the tenth sentence in the Japanese text corresponds to the eleventh sentence in the English text.

Although the well-known technique of language processing, which involves extracting the correlation between two texts, can be used as an associating method, cross-language information retrieval, for example, may be used to implement the associating method.

Then, the CPU (33) performs at least dependency analysis (40) and semantic analysis (41). Although these analyses are already known and any method can be used for the analyses, a Japanese dependency model previously proposed by the applicant et al. (described in Kiyotaka Uchimoto, Masaki Murata, Satoshi Sekine, and Hitoshi Isahara, "Dependency Model Using Posterior Context, "*Journal of Natural Language Processing, Vol. 7, No. 5, pp. 3-17* (2000)), for example, is applied to the Japanese and English languages to determine the dependence. This model serves to learn the presence or absence of the dependence of one of two words (or two phrases) on the other, and the model is implemented using a machine learning model. The dependence is determined so that the product of probabilities calculated by the learned model may be highest in the overall sentence.

The dependency analysis (40) is first performed on the Japanese text, which serves as the source language, so as to sequentially analyze the sentences constructing the Japanese text. When the Japanese sentence of interest is tagged and has its English translation, the English sentence of interest is also subjected to the dependency analysis (40), and a merging portion (43) determines that the highest product of probabilities in both the sentences is the result of the dependency analysis of the sentence of interest. Thus, inputting the Japanese text and other language text (s) allows merging the results of analysis of other language(s) and thus obtaining the result having the highest probability, therefore markedly improving the results of analysis, as compared to inputting the Japanese text alone.

Furthermore, the above-mentioned dependency structure undergoes case analysis (i.e. , semantic analysis). The degree of effectiveness of the input of bilingual texts in analyzing the dependency can be measured by an increase in the rate of correct interpretation of the dependency in the dependency structure.

The semantic analysis takes place in the same manner as the above-described dependency analysis. More specifically, the semantic analysis first obtains the results of analysis of the Japanese text, and moreover, when the English sentence corresponding to the Japanese sentence of interest is contained in the English text, the merging portion (43) compares the analytical results of both the Japanese and English sentences and uses the result of the semantic analysis having the higher probability.

As described above, the invention permits simply adopting the result of analysis having the higher probability, and thus facilitates improving the accuracy of analysis through the input of more languages.

The dependency analysis (40) and the semantic analysis (41) are also disclosed in Japanese Patent Application No. 2001-139563 filed by the applicant, wherein the detailed description is given with regard to named entity extraction as one example of the semantic analysis (41). The named entity extraction is one of important semantic analyses for choice of an exactly equivalent term in translation, and is extremely effective for translation into a third language.

However, the invention is directed to third language text generation, which includes the step of inputting two or more multi-lingual document texts, which has not been heretofore proposed, and the steps of analyzing, converting and generating. Therefore, any analysis method can be used. For example, well-known morphological analysis may take place to merge the results of analysis of multi-lingual document texts, and any merging method can be also selected because the merging method varies according to the analysis method.

The results of the dependency analysis and the semantic analysis mentioned above are stored in the hard disk (34).

As described above, the analysis system (21) includes an analysis module (45) which performs at least the dependency analysis (40) and the semantic analysis (41) on each language, and further includes the associating portion (42) and the merging portion (43) which are provided for the purpose of higher-accuracy analysis, and these structural components perform the respective processes.

Moreover, the analysis module (45) of the invention enables analysis based on actual data by performing the associating process for determining the correspondence and the merging process for merging the results of the analysis, while performing analysis in accordance with previously made rules such as a dictionary and grammar.

As mentioned above, the invention contributes to the implementation of the higher-accuracy analysis system (21) by merging rule-based information obtained by the analysis according to the rules and empirical information obtained by the analysis based on the actual data.

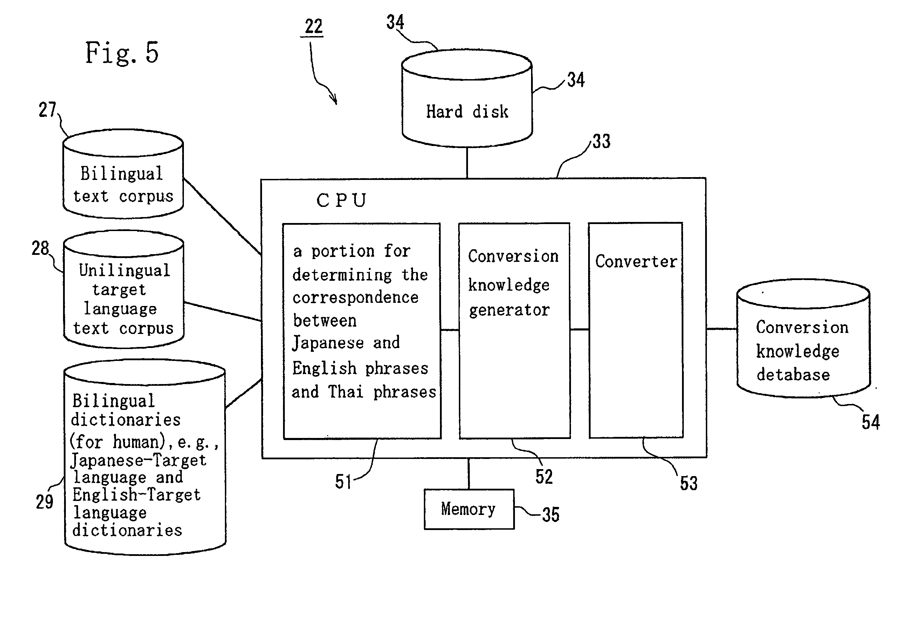

Next, the detailed description is given below with regard to the conversion system (22) . Fig. 5 shows the configuration of the conversion system.

As mentioned above, the conversion of one language into another language using a computer requires language information suitable for computing. Since manual making of the necessary information requires vast-scale operations by experts who understand the two languages, such operations are not practical for languages other than a pair of major languages.

Although there is provided the approach of automatically acquiring the language information from a large amount of multi-lingual text corpora, a large amount of multi-lingual text corpora are unlikely to be prepared for languages other than a pair of major languages, as mentioned above.

Thus, the invention uses a combination of a bilingual text corpus (27) of two languages that are source languages, a unilingual text corpus (28) of a target language (e.g., Thai), and small-scale data (29) of small-scale bilingual dictionaries of the source and target languages, such as Japanese-Thai and English-Thai dictionaries, so as to acquire language information.

The unilingual text corpus (28) may be small in scale and can effectively handle even languages having little likelihood of sufficient studies or analysis for language processing.

Information thus acquired is conversion knowledge (25) and language knowledge (26) for generation, and the conversion system (22) according to the invention controls the conversion of one language into another based on the conversion knowledge (25).

In order to produce high-accuracy output without the use of a large-scale third language text corpus, the invention includes comparing the inputted bilingual text corpus (27) to the unilingual third language text corpus (28), automatically acquiring language information characteristic of the third language, and generating a conversion knowledge database (54).

When each of words constructing a compound word or phrase, for example, undergoes simple conversion based on the dictionaries, the conversion often results in unnatural expression. The choice of equivalent terms in translation, the word order, and the like, in particular, are the information characteristic of the third language, and preferably the conversion knowledge contains the information.

Thus, the conversion system (22) of the invention includes a portion (51) for determining the correspondence between Japanese and English phrases and Thai phrases, and the correspondence determining portion (51) compares the bilingual Japanese-English text corpus (27) and document texts (20) to the Thai text corpus (28), and extracts, for example, a Thai phrase synonymous with Japanese and English phrases. Under control of a conversion knowledge generator (52), the extracted Thai phrase is stored in the conversion knowledge database (54) . For instance, a third language phrase in common, which corresponds with highest probability to both of Japanese and English phrases corresponding to each other, can be statistically determined, because the bilingual Japanese-English text corpus is used as the source language text corpus.

The conversion knowledge is not limited to the above-mentioned information but may contain associated data, which is obtained by statistically associating syntax structures that often appear in the bilingual Japanese-English text corpus (27) with syntax structures that often appear in the Thai text corpus. This makes it possible to convert the results of analysis obtained by the analysis system (21) into the syntax structures characteristic of Thai.

Furthermore, a converter (53) reads out from the conversion knowledge database (54) the conversion knowledge stored during current translation or the conversion knowledge generated by previous translation, and converts the language information on the dependency structure and semantic representation stored in the hard disk (34) by the analysis system (21). A converting method can be accomplished only by overwriting data as to the word dependency or the named entity with new data in accordance with the third language conversion knowledge.

The converted information is again stored in the hard disk (34).

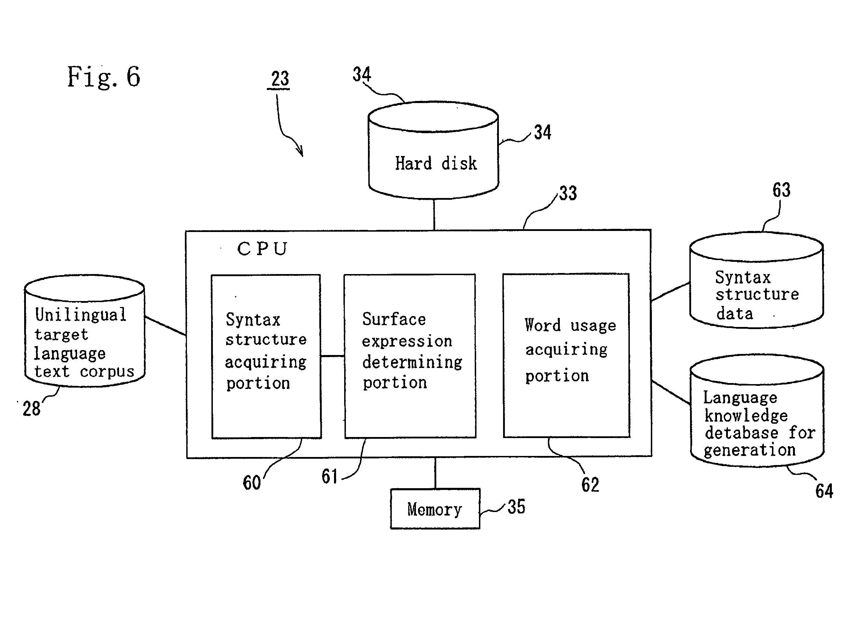

Finally, the detailed description is given with regard to the generation system (23). Fig. 6 shows the configuration of the generation system.

Until now, the development of techniques pertaining to generation has been less systematically performed. When ahuman directly reads a prepared document text, the accuracy of the document text is directly connected with "his or her will to read the document text." Thus, the invention uses the following technique, considering also the generation system (23) as an extremely important factor of a language processing system.

More specifically, there are provided a technique for acquiring information on usage of words from the unilingual text corpus (28) and a technique for acquiring information on syntax structures. To convert into a third language text the results of understanding acquired by using information on two or more languages, knowledge about the third language is of course necessary.

Improvement in the quality of generated text requires also acquisition of information characteristic of the third language. However, when researchers in the third language make a rule as to such information based on their own language senses, this is huge-scale operation, and therefore it is impractical to make such a rule for languages other than major languages.

Thus, the third language text generating device according to the invention uses a known technique to automatically acquire information on individual languages, based on data as to the individual languages.

More specifically, the CPU (33) uses a syntax structure acquiring portion (60) to automatically acquire the syntax structure related to the word order from the Thai text corpus (28), while operating in conjunction with the memory (35). Although acquiring methods include various known techniques in the field of language processing, the word order acquired from the corpus (described in Kiyotaka Uchimoto, Masaki Murata, Qing Ma, Satoshi Sekine, and Hitoshi Isahara, "Word Order Acquisition from Corpora, "*Journal of Natural Language Processing, Vol.* 7, *No. 4, pp. 163-180* (2000)), for example, may be used.

Specifically, a surface sentence having a natural word order is generated from the word dependency structure obtained by the analysis system (21) and the conversion system (22). In the exemplary embodiment, a word order model is applied to determine whether or not words are arranged in natural order.

This model serves to learn the natural order of modifiers when there are a plurality of modifiers modifying the same word, and the model is implemented using a well-known machine learning model. The natural word order is determined so that the product of probabilities calculated by the learned model may be highest in the overall sentence.

In this case, the automatically acquired information, such as probability values calculated by the learned model, may be stored in a language knowledge database (64) for generation and be used for subsequent generations.

After the determination of the basic syntax structure, a surface expression determining portion (61) determines appropriate surface expressions for individual words in the sentence. Although well-known generating methods for conventional language processing can be used to determine the surface expressions, an approach for determining end-of-sentence modality previously proposed by the applicant et al., for example, may be widely applied to other surface expressions including case expressions.

More specifically, a method for acquiring tense information at the end of a sentence (described in Masaki Murata, Qing Ma, Kiyotaka Uchimoto, and Hitoshi Isahara, "An Example-Based Approach to Japanese-to-English Translation of Tense, Aspect, and Modality,"*Journal of Japanese Society of Artificial Intelligence,* Vol. 16, *No. 1, pp. 20-27* (2001)) is the first method in which an example-based approach is applied to the issue of translation of tense, aspect and modality. The approach involves extracting examples of bilingual texts (i.e., examples of usages), which are very similar to tense, aspect and modality expressions under analysis, from a bilingual text database, and outputting resultant translation from the database. The approach can implement a simple configuration and also can be easily applied to other surface expressions, because match character strings starting at the end of a sentence (or a match in character strings including classification numbers in a classification vocabulary table) are used as definitions of similarity between the examples of usages.

The above-described method enables improving a computer-generated document text, which until now has been often outputted in the form of unnatural text, to level based on fluency of actual sentences in corpora.

Moreover, word usage information may be automatically acquired from the unilingual text corpus so as to add the information to the language knowledge (26) for generation.

Although the detailed description has been given above with regard to the analyzing means, the converting means and the generating means of the third language text generating device according to the invention, it is not necessarily required that the converting means be provided to carry out the invention.

More specifically, the converting means of the invention has the conversion knowledge characteristic of an output language, but the converting means does not have to be explicitly provided. For example, when generation can be sufficiently performed by using the knowledge and information about the language information possessed by the analyzing means and the generating means, the generating means can generate a third language directly from the results of analysis obtained by the analyzing means, without using independent means as the converting means.

In the device of the invention, the inputting means and the outputting means can be also implemented in various forms.

The inputting means can input information distributed through various media. For example, the inputting means has document text capturing/converting means capable of converting a document text, such as a sheet of paper or a book, into an electromagnetic record. This means can be already implemented with ease by using a scanner and an optical character reader and related software, and the means is contained in the device of the invention and can be thus configured to read a bilingual book written in two language, e.g., Japanese and English and thereby output a third language text such as a Thai text. Any outputting means can be used, and for example, a text can be displayed on a display device, written on a recording device, published on a network such as the Internet, or otherwise outputted.

Computer data, which is read out from an electromagnetic recording device such as a hard disk or an optical storage or memory, can be more easily read out and also inputted. In particular, a character code intended for multiple languages, such as Unicode, has been recently developed, and this makes it possible to simultaneously handle a plurality of languages, particularly even minor languages.

The use of such a code allows smoothly handling a plurality of languages at the same time, and facilitates recording data onto the above-mentioned electromagnetic recording device and reading out data therefrom.

Furthermore, applications that permit the invention to achieve great effect can include inputting computer data obtainable from an electromagnetic storage device mounted to a computer on a network such as the Internet.

On the Internet, most of distributed information is written in major languages because computers are widely available particularly in areas where the major languages are used.

Moreover, manual high-accuracy translation of major languages into each other is already provided for home pages of multinational companies and so on, and thus the use of the technique of the invention enables converting the major languages into many minor languages which are not yet translated. Therefore, the following operation is very effective: the inputting means of the device of the invention obtains computer data from an electromagnetic recording device connected to a network such as the Internet, and inputs the obtained data to the device of the invention.

Although the above description has been given with regard to the third language text generating device according to one embodiment of the invention, the invention may simply provide an algorithm for use in a computer, or may provide a program, which is implemented to run on any computer.

The program configured by the invention may be distributed over a network.

### POSSIBILITY OF INDUSTRIAL UTILIZATION

According to the invention, the above-described configuration allows simultaneously analyzing sentences written in a plurality of languages and having the same contents, thus accurately understanding the sentences, and thereby generating an accurate third language text. Moreover, the configuration includes the converting process as needed, thus contributing to further improvement in the accuracy. Thus, minor languages used in developing countries and the like can be used to provide information for these countries. Moreover, when the technique of the invention is ensured, a main factor of development to handle a new language is the acquisition of language information on this language, and thus any country can probably pursue such development.

Also in the future, a large amount of document texts prepared in English will be continuously translated by hand into high-quality Japanese document texts. However, such document texts are less likely to be translated with high quality into many other Asian languages.

The invention enables dramatically improving the level of translation into various Asian languages such as Thai. By ensuring the technique of the invention, many developing countries having the problem of digital divide can solve the problem by their own efforts and a little support.

Furthermore, the invention makes it possible to generate a third language text with dramatically high accuracy at low cost, as compared to translation from a unilingual text. The invention may provide a device provided with the above-described algorithm, or may provide a program which can be distributed over a network.

## Claims

1. A third language text generating algorithm, for use in computer-based language processing, for generating a new third language text by using a plurality of multi-lingual texts, the algorithm including the steps of:
inputting two or more multi-lingual texts written in different languages including a first language which serves as a source language and at least a second language into which the first language is translated;
performing language analysis including at least dependency analysis and semantic analysis, on each of the multi-lingual texts in the form of each language or a combination of any two or more languages, thereby obtaining language information on at least a dependency structure and semantic representation; and
generating a third language text,
wherein the generating step generates a third language text by using the language information obtained by the analyzing step, or
the algorithm further including the step of performing language conversion based on the results of analysis obtained by the analyzing step or based on the results of analysis and conversion knowledge characteristic of a third language, the converting step following the analyzing step,
wherein the generating step generates a third language text by using at least either the language information obtained by the analyzing step or the results of conversion obtained by the converting step.

2. A third language text generating algorithm according to claim 1, wherein the analyzing step includes:
an associating process for performing associating to determine the correspondence between words constructing the multi-lingual texts, the correspondence between phrases constructing the multi-lingual texts, and the correspondence between sentences constructing the multi-lingual texts;
an analyzing process for analyzing at least the first language text by using an analysis module previously prepared; and
a merging process for analyzing parts in at least the second language text corresponding to the first language text, based on the results of associating, by using an analysis module previously prepared, and merging the results of analysis.

3. A third language text generating algorithm according to claim 1 or 2, wherein at least one of the analyzing, converting and generating steps uses rule-based information containing at least either dictionary information or grammar information on each language, and empirical information based on the results of learning obtained from actual data in corpora.

4. A third language text generating algorithm according to claims 1 through 3, wherein the generating step includes:
automatically acquiring part or all of information on at least either third language syntax structure information or third language word usage information from an existing third language corpus; and
generating a third language text based on the automatically acquired information characteristic of the third language.

5. A third language text generating device, for use in language processing, for generating a new third language text by using a plurality of languages, the device including:
inputting means for inputting two or more multi-lingual texts written in different languages including a first language which serves as a source language and at least a second language into which the first language is translated;
analyzing means for performing language analysis including at least dependency analysis and semantic analysis, on each of the multi-lingual texts in the form of each language or a combination of any two or more languages, thereby obtaining language information on at least a dependency structure and semantic representation;
generating means for generating a third language text; and
outputting means capable of outputting the third language text generated by the generating means,
wherein the generating means generates the third language text by using the language information obtained by the analyzing means, or
the device further including converting means for performing language conversion based on the results of analysis obtained by the analyzing means or based on the results of analysis and conversion knowledge characteristic of a third language,
wherein the generating means generates the third language text by using at least either the language information obtained by the analyzing means or the results of conversion obtained by the converting means.

6. A third language text generating device according to claim 5, wherein the analyzing means includes:
an associating portion which performs associating to determine the correspondence between words constructing the multi-lingual texts, the correspondence between phrases constructing the multi-lingual texts, and the correspondence between sentences constructing the multi-lingual texts;
an analysis module which analyzes at least the first language text; and
a merging portion which analyzes parts in at least the second language text corresponding to the first language text, based on the results of associating, by using an analysis module previously prepared, and merges the results of analysis.

7. A third language text generating device according to claim 5 or 6, further including information storing means for storing rule-based information containing at least either dictionary information or grammar information on each language, and empirical information based on the results of learning obtained from actual data in corpora,
wherein at least one of the analyzingmeans, the converting means, and the generating means performs analysis based on the rule-based information and the empirical information stored by the information storing means.

8. A third language text generating device according to claims 5 through 7, further including at least either third language information acquiring means for automatically acquiring part or all of information on at least either third language syntax structure information or third language word usage information from an existing third language corpus, or third language information storing means capable of holding the previously automatically acquired information characteristic of the third language,
wherein the generating means generates a third language text based on the information characteristic of the third language.

9. A third language text generating device according to claims 5 through 8, wherein the inputting means can input to the device at least one of computer data converted by document text capturing/converting means for converting a document text, such as a sheet of paper or a book, into an electromagnetic record; computer data read out from an electromagnetic recording device such as a hard disk or an optical storage or memory; and computer data obtainable from an electromagnetic storage device on a network such as the Internet.

10. A third language text generating program, for use in computer-based language processing,for generating a new third language text by using a plurality of multi-lingual texts, the program including;
an inputting portion which obtains two or more multi-lingual texts written in different languages including a first language which serves as a source language and at least a second language into which the first language is translated, from a storage device or an input device of a computer;
an analyzing portion which performs language analysis including at least dependency analysis and semantic analysis, on each of the obtained multi-lingual texts in the form of each language or a combination of any two or more languages, and obtains language information on at least a dependency structure and semantic representation by arithmetic operation using an arithmetic unit and a storage device of a computer;
a generating portion which generates a third language text by arithmetic operation using the arithmetic unit and the storage device of the computer; and
an outputting portion which outputs the third language text generated by the generating portion by using the storage device or an output device of the computer,
wherein the generating portion generates the third language text by using the language information obtained by the analyzing portion, or
the program further including a converting portion which performs language conversion based on the results of analysis obtained by the analyzing portion or based on the results of analysis and conversion knowledge characteristic of a third language,
wherein the generating portion generates the third language text by using at least either the language information obtained by the analyzing portion or the results of conversion obtained by the converting portion.

11. A third language text generating program according to claim 10, wherein the analyzing portion includes:
an associating routine which performs associating to determine the correspondence between words constructing the multi-lingual texts, the correspondence between phrases constructing the multi-lingual texts, and the correspondence between sentences constructing the multi-lingual texts;
an analysis routine which analyzes at least the first language text; and
a merging routine which analyzes parts in at least the second language text corresponding to the first language text, based on the results of associating, by using an analysis routine, and merges the results of analysis.

12. A third language text generating program according to claim 10 or 11, wherein at least one of the analyzing, converting and generating portions uses rule-based information containing at least either dictionary information or grammar information on each language, and empirical information based on the results of learning obtained from actual data in corpora.

13. A third language text generating program according to claims 10 through 12, further including a third language information reading routine which reads out information characteristic of a third language obtained by automatically acquiring part or all of information on at least either third language syntax structure information or third language word usage information from an existing third language corpus,
wherein the generating portion generates a third language text based on the information characteristic of the third language.
